# EUROPEAN PATENT APPLICATION

(11) **EP 2 000 064 A1**
(43) Date of publication of application: **10.12.2008**
(21) Application number: 07109590.5
(22) Date of filing: 05.06.2007
(51) Int. Cl.: A47J 31/40

(54) **Apparatus for preparing a drink**

(71) Applicant: Criali Investment SA, Luxembourg (LU)
(72) Inventor: Accursi, Giovanni, 40046 Porretta Terme (Bologna) (IT)
(74) Representative: Ponchiroli, Simone

(57) **Abstract**

An apparatus for preparing a drink by passing hot water in a capsule containing a substance to be extracted. The apparatus (1) comprises at least a main body (2) forming a housing (3) for a capsule containing a substance to be extracted, and at least a secondary body (4) associated with the main body (2). Manual movement means (5) move the secondary body (4), between an open position and a closed position. The apparatus (1) also comprises at least one pusher element (11) operatively associated with the housing (3) and able to move between a home position in which it allows a capsule to be positioned in the housing (3) and an operating position in which it is able to act on a capsule inserted in the housing (3), at least partly pushing it out of the housing (3). There are also means (12) for moving the pusher element (11) to the operating position, controlled by the manual movement means (5) and comprising at least one first rocker arm (17).

## Description

The present invention relates to an apparatus for preparing a drink of the type in which the drink is obtained by passing hot water in a single-dose capsule containing a substance to be extracted.

At present there are many prior art types of apparatuses which allow the preparation of a drink, for example espresso coffee, by extraction of a substance contained in a disposable capsule.

All such apparatuses have a housing in which the capsule can be inserted and with which there are associated suitable means for injecting water into the capsule, as well as further means for allowing the drink to flow out (for example by piercing a wall of the capsule).

However, many prior art apparatuses have the disadvantage of difficult extraction of the capsule from the housing once the drink has been prepared. The capsules are usually almost completely inserted in the housing, making it relatively difficult to get a grip of them so as to be able to extract them. The difficulty is accentuated by the fact that the capsule and the housing are usually boiling hot (since hot water has just passed through them), and in many cases the base of the capsule has been penetrated by suitable piercing means which obstruct detachment of the capsule from the base of the housing.

To solve this problem, over the years many solutions have been developed in which there are expulsion elements associated with the capsule housing. For example, the solutions described in patents WO 2006/069801, US 2006/075902, US 2002/002913, WO 2006/048912, EP 151252, US 6079315.

In this situation, the technical purpose which forms the basis of the present invention is to provide a new apparatus for preparing a drink which allows easy extraction of the capsule after use.

The technical purpose specified and the aims indicated are substantially achieved by an apparatus for preparing a drink as described in the claims herein.

Further features and advantages of the present invention are more apparent in the detailed description below, with reference to several preferred, non-limiting embodiments of an apparatus for preparing a drink, illustrated in the accompanying drawings, in which:
- Figure 1 is a schematic cross-section, with some parts cut away, of an apparatus made in accordance with the present invention;
- Figure 2 is a side view of the apparatus of Figure 1; and
- Figure 3 illustrates an alternative embodiment of a detail from Figure 2.

With reference to the accompanying drawings, the numeral 1 denotes as a whole an apparatus for preparing a drink by passing hot water in a capsule (belonging to the prior art and therefore not illustrated) containing a substance to be extracted, made in accordance with the present invention.

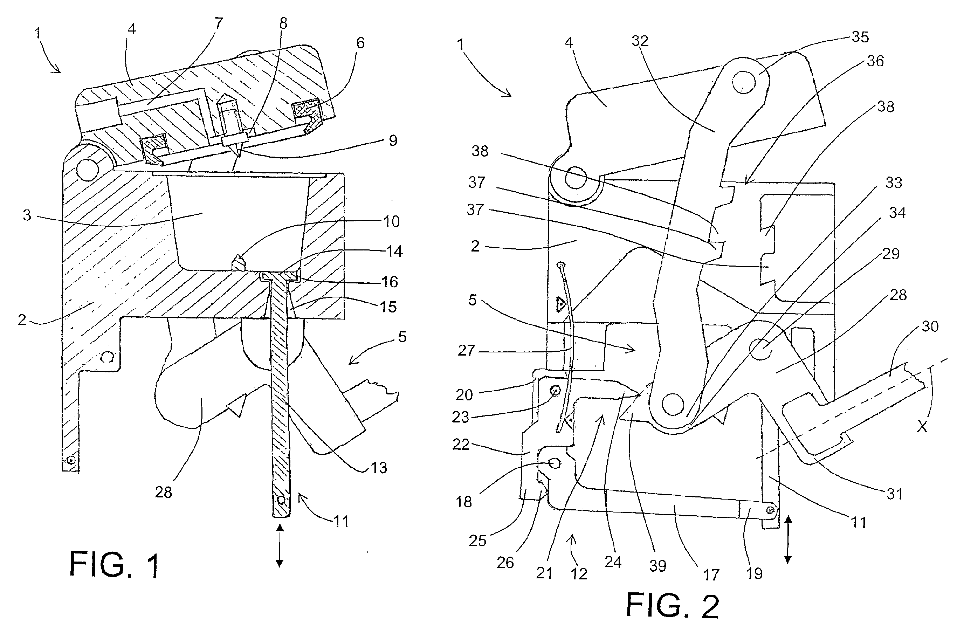

As shown in particular in Figure 1, the apparatus 1 comprises at least a main body 2 forming a housing 3 for a capsule containing the substance to be extracted, and at least a secondary body 4 associated with the main body 2 and which, in the embodiment illustrated, constitutes a lid for the housing 3. There are also manual movement means 5 able to move the secondary body 4 relative to the main body 2, between an open position, in which the main body 2 and the secondary body 4 are positioned in such a way as to allow capsule insertion in and removal from the housing 3, and a closed position, in which the main body 2 and the secondary body 4 are positioned in such a way that the housing 3 is closed.

In the embodiment illustrated, the secondary body 4 is pivoted at the main body 2 according to a horizontal axis of rotation, in such a way that the secondary body 4, in the open position, is rotated upwards relative to the closed position. It should be noticed that the in accompanying drawings the secondary body 4 is shown in an intermediate position between the open and closed positions.

Moreover, there are damper and sealing means inserted between the main body 2 and the secondary body 4 (ring-shaped seal 6 in Figure 1).

In the known way, the apparatus 1 also comprises means for making and dispensing the drink. Depending on requirements, the latter may take any form suitable for the purpose.

By way of example only, in the accompanying drawings associated with the housing 3 there are means for injecting hot water into the capsule, comprising a channel 7 lo terminating in a recess 8 extending around a first fixed spike 9 integral with the secondary body 4 and positioned in such a way that it projects into the housing 3, piercing the capsule when the housing 3 is closed. In other embodiments, the channel 7 may also terminate in a first hollow spike 9, or there 1s may be two or more first spikes 9.

For drink outflow, Figure 1 shows a second fixed spike 10 integral with the base of the housing 3 and intended to pierce the base of the capsule. Suitable channels, not illustrated, allow the drink to flow out.

In any case, the present invention may be applied irrespective of the structure of the means used to inject water into the capsule and to allow drink dispensing.

In accordance with the present invention, the apparatus 1 comprises at least one pusher element 11 operatively associated with the housing 3 and able to move between a home position (Figures 1 and 2) in which it allows a capsule to be positioned in the housing 3 and an operating position (not illustrated) in which it is able to act on a capsule inserted in the housing 3 to push it at least partly out of the housing 3. Associated with the pusher element 11 there are movement means 12 (Figure 2) designed at least to move the pusher element to the operating position.

In the embodiment illustrated in Figure 1, the pusher element 11 consists of a rigid rod 13 having an enlarged head 14 (which may be fixed or jointed to the rod 13), and which is inserted in a through-hole 15 that starts outside the main body 2 and ends with a counterbore 16 at the base of the housing 3. Said counterbore 16 houses the head 14 of the pusher element 11 when the latter is in the home position.

Also associated with the pusher element 11 there are hydraulic seal means (not illustrated) which prevent the drink from flowing out of the main body 2 via the through-hole 15. Depending on the embodiments, the means 12 for moving the pusher element 11 may take different forms.

In any case, the means 12 for moving the pusher element 11 are controlled directly by the manual movement means 5, in such a way that they move the pusher element 11 to the operating position when the main body 2 and the secondary body 4 are brought to the open position.

In the embodiment illustrated the movement means 12 comprise at least one first rocker arm 17 with an intermediate portion pivoted at the main body 2 and by means of a first pin 18, and having a first end 19 and a second end 20. The first end 19 of the first rocker arm 17 is rotatably connected to the pusher element 11, whilst the second end 20 is operatively connected to a temporary hooking element 21.

The first rocker arm 17 may rotate, relative to the main body 2, between a first position in which it holds the pusher element 11 in the home position (Figures 1 and 2) and a second position in which it moves the pusher element 11 to the operating position (anti-clockwise rotation relative to the position illustrated in Figures 1 and 2).

The temporary hooking element 21 is designed to be engaged by the manual movement means during the movement of the secondary body 4 from the closed position to the open position to cause the rotation of the first rocker arm 17, and to be released by the manual movement means when the secondary body 4 reaches the open position.

In the embodiment illustrated, the temporary hooking element 21 consists of a second rocker arm 22 with an intermediate portion pivoted, by means of a second pin 23, at the second end 20 of the first rocker arm 17. The second rocker arm 22 in turn has a first end 24 which can be operated by the manual movement means 5 and a second end 25 equipped with a stop element 26 designed to interact with the first rocker arm 17 as described below.

Thanks to the second pin 23, the second rocker arm 22 can therefore move, relative to the first rocker arm 17, between a first position in which the stop element 26 rests on the first rocker arm 17 (Figure 1), and a second position in which the stop element 26 is distanced from the first rocker arm 17 (position not illustrated but corresponding to a clockwise rotation of the second rocker arm 22 relative to the position illustrated in Figure 2).

The fact that, when the second rocker arm 22 is in its first position, the stop element 26 is in contact witti the first rocker arm 17 is intended to render the first rocker arm and the second rocker arm 22 integral with one another during the movement of the secondary body 4 from the closed position 1s to the open position, so that the action of the manual movement means 5 on the second rocker arm 22 causes not a rotation of the second rocker arm 22 relative to the first rocker arm 17, but instead a joint rotation of the first rocker arm and the second rocker arm 22 relative to the main body 2 (anti-clockwise in Figure 1), for the functional reasons indicated below.

In contrast, when the stop element 26 is distanced from the first rocker arm 17 it allows the secondary body to return from the open position to the closed position.

Advantageously, the movement means 12 also comprise at least one elastic return element 27 designed, in the absence of stresses, to hold the second rocker arm 22 in its first position and, consequently, the first rocker arm 17 in its first position. In the accompanying drawings the elastic element 27 consists of a flat spring mounted between the main body 2 and the second rocker arm 22.

In the embodiment illustrated in Figure 2, the movement means 12 comprise:
at least one third rocker arm 28 whose intermediate portion is pivoted at the main body 2 by means of a third pin 29;
at least one actuator element 30 associated with a first end 31 of the third rocker arm 28; and
at least one bar 32 whose first end 33 is pivoted at a second end 34 of the third rocker arm 28, and whose second end 35 is pivoted at the secondary body 4.

Advantageously, however, the apparatus 1 comprises two third rocker arms 28 and two bars 32 mounted specularly on the two sides of the main body 2, whilst the actuator element 30 is associated with both of the third rocker arms 28. The actuator element 30 may for example consist of a C-shaped element in which the two arms of the C are connected to the two third rocker arms 28 whilst the central part forms a handgrip for a user (not illustrated).

Rotation of the third rocker arm 28 about the third pin 29 using the actuator element 30, causes, by means of the bar 32, rotation of the secondary body 4 between the open position and the closed position.

In the embodiment illustrated in Figure 2, the third rocker arm 28 has a curved shape (substantially forming a right angle) and the actuator element 30 is connected to the third rocker arm 28 according to a direction of action X substantially parallel with the line joining the point where the third rocker arm 28 is pivoted at the main body 2 to the point where the bar 32 is pivoted at the third rocker arm 28 (Figure 1).

Each third rocker arm 28 can move between a maximum traction position in which the point where the bar 32 is pivoted at the third rocker arm 28 is vertically aligned below the point where the third rocker arm 28 is pivoted at the main body 2, and a position in which the housing 3 is open (positions not illustrated in the accompanying drawings).

When the third rocker arm 28 is in the open position, the point where the bar 32 is pivoted at the third rocker arm 28 is rotated through a predetermined angle of rotation relative to the maximum traction position, according to a second direction of rotation which in Figure 1 is clockwise.

In the third rocker arm 28 maximum traction position, the secondary body 4 is in its position closest to the main body 2. However, to prevent housing 3 accidental opening, the apparatus 1 also comprises means 36 for locking the bar 32 when the secondary body 4 is in the closed position, said means comprising at least one tooth 37 and at least one cavity 38 shaped to match the tooth, one associated with the bar 32 and the other associated with the main body 2 (two in Figure 1).

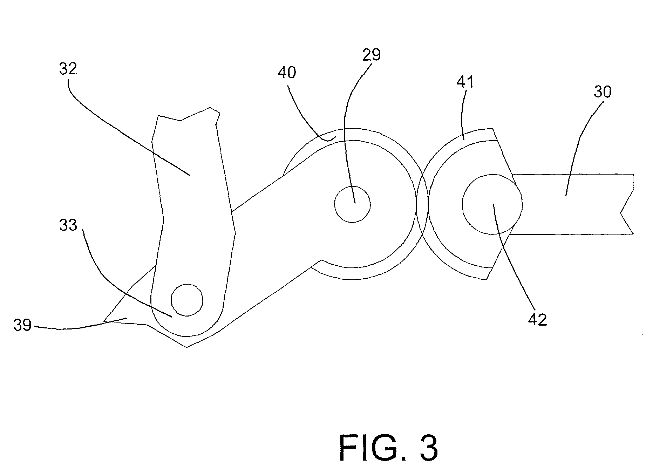

Figure 3 shows an alternative embodiment of the manual movement means 5. The portion of the third rocker arm 28 forming the first end 31 is substituted by a first ring gear 40 concentric to the third pin 29. The first ring gear meshes with a second ring gear 41 pivoted at the main body 2 by means of a fourth pin 42. The second ring gear 41 may be rotatably driven about the fourth pin 42 by an actuator element 30 which may be rigidly connected either directly to the second ring gear 41 or to a through-bar (not illustrated) which joins two ring gears 41 positioned on the two sides of the main body 2 (similarly to what is described above relative to the third rocker arms 28).

Therefore, in this case the actuator element 30 is not rigidly constrained to the third rocker arm 28 but only engages with it.

Moreover, in the cases illustrated in Figures 2 and 3, the manual movement means 5 comprise an engagement element 39 integral with the third rocker arm 28 (with only one of the two in the accompanying drawings).

The engagement element 39 is positioned in such a way that it causes, by rotation of the first and second rocker arms 17, 22, movement of the pusher element 11 from the home position to the operating position after the main body 2 has moved from the closed position to the open position, as well as rotation of the second rocker arm 22 from its first position to its second position after the main body 2 has moved from the closed position to the open position.

Finally, it should be emphasised that in accordance with some preferred embodiments of the present invention, the housing 3 is positioned at an angle to the horizontal, so that the movement of the pusher element 11 to the operating position causes the capsule to come out of the housing 3 due to the effect of gravity.

Operation of the apparatus 1 disclosed is the same as that of prior art apparatuses as regards loading the capsule and preparing the drink.

In contrast, in terms of removing the capsule from the housing 3, when the manual movement means 5 are operated to move the secondary body 4 to the open position, at a certain point the engagement element 39 makes contact with the first end 24 of the second rocker arm 22, pushing it upwards in the accompanying drawings. Since the second rocker arm 22 is in its first position with the stop element 26 in contact with the first rocker arm 17, the thrust applied by the engagement element 39 causes an integral rotation of the first and second rocker arms 17, 22 about the first pin 18 (anti-clockwise in Figure 2). Consequently, the pusher element 11 is moved towards the operating position, pushing the capsule out of the housing 3.

At this point the operator can easily remove the used capsule, or if the housing 3 is at a sufficient angle, it may drop out of the housing 3 on its own.

Completion of opening of the secondary body 4 causes the engagement element 39 to release the first end 24 of the second rocker arm 22.

At this point the elastic return element 27 acts directly on the second rocker arm 22 and, indirectly, on the first rocker arm 17 returning them towards their first positions illustrated in Figure 2. Consequently, the pusher element 11 returns to its home position, allowing a new capsule to be inserted in the housing 3.

When the manual movement means 5 are operated to close the housing 3, the engagement element 39 again makes contact with the first end 24 of the second rocker arm 22, causing a rotation opposite to that described above (clockwise in Figure 2). Consequently, the second rocker arm 22 is rotated, relative to the first rocker arm 17, from its first position to its second position, until, after a further rotation of the third rocker arm 28, the engagement element 39 releases the first end 24 of the second rocker arm 22. At that moment the elastic return element 27 intervenes again, returning the second rocker arm 22 to its first position.

The present invention brings important advantages.

Thanks to the present invention removal of the capsule from the housing is made significantly easier than in prior art apparatuses. By sufficiently angling the housing it is possible to achieve automatic removal of the capsule from the housing.

It should also be noticed that the present invention is relatively easy to produce and even the cost linked to implementation of the invention is not very high.

The invention described may be modified and adapted in several ways without thereby departing from the scope of the inventive concept.

All details of the invention may be substituted by other technically equivalent elements and, in practice, all of the materials used, as well as the shapes and dimensions of the various components, may be any according to requirements.

## Claims

1. An apparatus for preparing a drink by passing hot water in a capsule containing a substance to be extracted, the apparatus comprising:
at least a main body (2) forming a housing (3) for a capsule containing a substance to be extracted;
at least a secondary body (4) associated with the main body (2);
means (5) for manual movement of the secondary body (4) relative to the main body (2), between an open position, in which the main body (2) and the secondary body (4) are positioned in such a way as to allow capsule insertion in and removal from the housing (3), and a closed position, in which the main body (2) and the secondary body (4) are positioned in such a way that the housing (3) is closed;
means for making and dispensing the drink;
at least one pusher element (11) operatively associated with the housing (3) and able to move between a home position in which it allows a capsule to be positioned in the housing (3) and an operating position in which it is able to act on a capsule inserted in the housing (3), at least partly pushing it out of the housing (3); and
means (12) for moving the pusher element (11), comprising at least one first rocker arm (17) with an intermediate portion pivoted at the main body (2) and having a first end (19) connected to the pusher element (11) and a second end (20), the first rocker arm (17) being able to rotate, relative to the main body (2), between a first position in which it holds the pusher element (11) in the home position and a second 5 position in which it moves the pusher element (11) to the operating position, the movement of the first rocker arm (17) to the second position being caused by the manual movement means (5) during the movement of the secondary body (4) from the closed position to the open position.

2. The apparatus according to claim 1, **characterised in that** the movement means (12) also comprise a temporary hooking element (21) associated with the second end (20) of the first rocker arm (17) and designed to be engaged by the manual movement means during the movement of the secondary body (4) from the closed position to the open position to cause the rotation of the first rocker arm (17), and to be released by the manual movement means when the secondary body (4) reaches the open position.

3. The apparatus according to claim 2, **characterised in that** the temporary hooking element (21) comprises at least one second rocker arm (22) with an intermediate portion pivoted at the second end (20) of the first rocker arm (17), and having a first end (24) which can be operated by the manual movement means (5) and a second end (25) equipped with a stop element (26), the second rocker arm (22) being able to move, relative to the first rocker arm (17), between a first position in which the stop element (26) rests on the first rocker arm (17) to render the first and second rocker arms (17, 22) integral with one another during the movement of the secondary body (4) from the closed position to the open position, and a second position in which the stop element (26) is distanced from the first rocker arm (17), allowing the secondary body to return from the open position to the closed position.

4. The apparatus according to claim 3, **characterised in that** the movement means (12) also comprise at least one elastic return element (27) which, in the absence of stresses, holds the second rocker arm (22) in its first position and, consequently, the first rocker arm (17) in its first position.

5. The apparatus according to claim 4, **characterised in that** 1s the elastic return element (27) consists of a flat spring mounted between the main body (2) and the second rocker arm (22).

6. The apparatus according to any of the foregoing claims, **characterised in that** the secondary body (4) is pivoted at the main body (2).

7. The apparatus according to claim 6, **characterised in that** the secondary body (4) is pivoted at the main body (2) according to a horizontal axis of rotation, the secondary body (4) in the open position being rotated upwards relative to the closed position.

8. The apparatus according to any of the foregoing claims, **characterised in that** the manual movement means (5) comprise:
at least one third rocker arm (28) whose intermediate portion is pivoted at the main body (2);
at least one actuator element (30) associated with the third rocker arm (28) to rotate it; and
at least one bar (32) whose first end (33) is pivoted at a second end (34) of the third rocker arm (28), and whose second end (35) is pivoted at the secondary body (4);
rotation of the third rocker arm (28) causing, by means of the bar (32), rotation of the secondary body (4) between the open position and the closed position.

9. The apparatus according to claim 8, **characterised in that** the third rocker arm (28) has a curved shape.

10. The apparatus according to claim 9, **characterised in that** the actuator element (30) is connected to the third rocker arm (28) according to a direction of action substantially parallel with the line joining the point where the third rocker arm (28) is pivoted at the main body (2) to the point where the bar (32) is pivoted at the first rocker arm (17).

11. The apparatus according to claim 8, **characterised in that** the third rocker arm (28) comprises at least one first ring gear (40) concentric to the point where it is pivoted at the main body (2) and **in that** the actuator element (30) controls a second ring gear (41) pivoted at the main body (2) and meshed with the first ring gear (40).

12. The apparatus according to claim 8, 9, 10 or 11, **characterised in that** it also comprises means (36) for locking the bar (32) when the secondary body (4) is in the closed position.

13. The apparatus according to claim 12, **characterised in that** the locking means (36) comprise at least one tooth (37) and at least one cavity (38) shaped to match it, being associated one with the bar (32) and the other with the main body (2).

14. The apparatus according to any of the claims from 8 to 13, **characterised in that** the third rocker arm (28) can move between a maximum traction and closed position in which the point where the bar (32) is pivoted at the first rocker arm (17) is vertically aligned below the point where the third rocker arm (28) is pivoted at the main body (2), and a position in which the housing (3) is open in which the point where the bar (32) is pivoted at the third rocker arm (28) is rotated through a predetermined angle of rotation relative to the maximum traction position.

15. The apparatus according to any of the claims from 8 to 14, **characterised in that** it comprises two third rocker arms (28) and two bars (32) specularly mounted at the two sides of the main body (2), the actuator element (30) being directly or indirectly associated with both of the third rocker arms (28).

16. The apparatus according to any of the claims from 8 to 15, **characterised in that** the manual movement means (5) comprise an engagement element (39) designed to engage the first end (24) of the second rocker arm (22).

17. The apparatus according to claim 16, **characterised in that** the engagement element (39) is integral with the third rocker arm (28).

18. The apparatus according to any of the foregoing claims, **characterised in that** the housing (3) is positioned at an angle to the horizontal, so that the pusher element (11) in the operating position causes the capsule to come out of the housing (3).
